# EUROPÄISCHE PATENTSCHRIFT

(11) **EP 3 431 417 B1**
(45) Veröffentlichungstag und Bekanntmachung des Hinweises auf die Patenterteilung: **28.06.2023**
(21) Anmeldenummer: 18193914.1
(22) Anmeldetag: 23.05.2016
(51) Int. Cl.: B65G 1/04, B65G 39/06, B65G 1/137, B65G 43/08, B65G 39/12

(54) **LAGERSYSTEM**
STORAGE SYSTEM
SYSTÈME DE STOCKAGE

(30) Priorität: 29.05.2015 AT 504392015; 23.12.2015 AT 511012015
(43) Veröffentlichungstag der Anmeldung: 23.01.2019
(62) Teilanmeldung aus: 16735973.6
(73) Patentinhaber: TGW Mechanics GmbH, 4600 Wels (AT)
(72) Erfinder: GROSSE, Eric, 63225 Langen (DE); GRUBER, Thomas, 4643 Pettenbach (AT); RAUSCH, Martin, 4810 Gmunden (AT); SCHAUER, Johannes, 4076 St. Marienkirchen an der Polsenz (AT)
(74) Vertreter: Burger, Hannes

(56) Entgegenhaltungen:
- WO-A1-2015/027261
- DE-A1- 19 534 291
- FR-A- 433 812
- JP-A- H0 270 571
- JP-A- H0 664 712
- JP-A- H04 345 412
- JP-B2- 3 249 900

## Beschreibung

Die Erfindung betrifft ein Lagersystem, wie im Oberbegriff des Anspruches 1 beschrieben.

Die WO 2015/027261 A1 offenbart ein Lagersystem gemäß dem Oberbegriff des Anspruches 1. Insbesondere offenbart das Dokument ein Lagersystem, bei dem auf einer Fahrebene ein erstes Transportfahrzeug und ein zweites Transportfahrzeug bewegt werden. Das erste Transportfahrzeug ist auf der rechten Seite mit einer Führungseinheit versehen ist, welche auf einer zweiten Führung an voneinander abgewandten, parallel verlaufenden Führungsabschnitten abrollbar anliegende Führungsräder aufweist. Das zweite Transportfahrzeug ist auf der linken Seite mit einer Führungseinheit versehen ist, welche auf einer zweiten Führung an voneinander abgewandten, parallel verlaufenden Führungsabschnitten abrollbar anliegende Führungsräder aufweist. Der Achsabstand zwischen den Führungsräder ist unveränderbar.

Es sind aus dem Stand der Technik gemäß der EP 2 327 643 A1, EP 2 543 611 A1, EP 2 754 625 A1, EP 2 530 035 A1 und WO 2013/090970 A2 Lagersysteme bekannt, welche ein erstes Lagerregal mit in übereinander liegenden Regalebenen nebeneinander angeordneten Lagerkanälen, ein zweites Lagerregal mit in übereinander liegenden Regalebenen nebeneinander angeordneten Lagerkanälen, eine Regalgasse, welche in x-Richtung zwischen dem ersten Lagerregal und zweiten Lagerregal verläuft, und eine Vielzahl von in x-Richtung auf Führungsschienen verfahrbaren Transportfahrzeugen zum Einlagern von Stückgütern in das Lagerregal und Auslagern von Stückgütern aus dem Lagerregal umfassen. Diese Transportfahrzeuge sind so genannte Einebenenregalbediengeräte, daher bedienen diese eine Regalebene. Diese Lagersysteme umfassen ferner eine Ladegut-Manipulationseinheit, welche zumindest eine Stückgut-Hebevorrichtung mit einer heb- und senkbaren Transportvorrichtung zum Einlagern und/oder Auslagern von Stückgütern sowie eine Puffervorrichtung mit Bereitstellvorrichtungen für das Zwischenpuffern von Stückgütern aufweisen. Die Stückgut-Hebevorrichtung ist an eine Fördertechnik zum Antransport und Abtransport von Stückgütern zu bzw. von der Stückgut-Hebevorrichtung angeschlossen. Die Führungsschienen sind je Regalebene paarweise angeordnet und an den Lagerregalen befestigt, wobei eine der Führungsschienen je Regalebene eine erste Führung und eine zweite Führung ausbildet. Die Transportfahrzeuge können über die Führungsschienen die Lagerkanäle und die Bereitstellvorrichtungen anfahren, um Stückgüter zwischen den Lagerkanälen und Bereitstellvorrichtungen zu transportieren.

Die erste Führung erstreckt sich parallel zur Längsrichtung der Lagerregale und in einer parallel zur Regalebene verlaufenden ersten Führungsebene. Die zweite Führung erstreckt sich parallel zur Längsrichtung der Lagerregale und in einer im Wesentlichen senkrecht zur Regalebene verlaufenden zweiten Führungsebene.

Das Transportfahrzeug, wie es beispielweise aus der EP 2 351 698 A1, EP 2 526 032 A1, EP 2 530 034 A1, EP 2 759 494 A1 und WO 2013/013252 A1 bekannt ist, umfasst einen Grundrahmen, Laufräder, eine Transportvorrichtung zum Einlagern von Stückgütern in den Lagerkanal und Auslagern von Stückgütern aus dem Lagerkanal, eine Aufnahmeplattform, einen Fahrantrieb, eine elektronische Steuereinheit und zumindest eine Führungseinheit. Die Aufnahmeplattform ist dazu eingerichtet, zumindest ein Stückgut zu transportieren. Die Transportvorrichtung umfasst parallel zu den Längsseiten der Aufnahmeplattform angeordnete Teleskopeinheiten, welche jeweils einen Grundrahmen, einen gegenüber dem Grundrahmen verstellbaren ersten Schlitten und einen gegenüber dem ersten Schlitten verstellbaren zweiten Schlitten aufweisen. Die zweiten Schlitten sind jeweils an ihren einander gegenüberliegenden Endbereichen mit je einem äußeren Transportorgan und zumindest einem dazwischen angeordneten inneren Transportorgan versehen. Die Transportorgane sind zwischen einer gegenüber dem Stückgut zurückgezogenen Ausgangsstellung und einer das Stückgut ergreifenden Betätigungsstellung verstellbar.

Die Laufräder liegen auf der ersten Führung abrollbar auf und sind am Grundrahmen drehbar gelagert. Zumindest eines der Laufräder wird vom Fahrantrieb angetrieben.

Die Führungseinheit ist über eine Lagervorrichtung am Grundrahmen fest montiert und weist auf der zweiten Führung an voneinander abgewandten und parallel verlaufenden Führungsabschnitten abrollbar anliegende Führungsräder auf, wobei die Führungsräder an der Lagervorrichtung drehbar gelagert sind. Das Transportfahrzeug wird auf der Fahrbewegung entlang der Lagerregale in senkrechter zur zweiten Führungsebene geführt bewegt, wie beispielweise in der WO 2013/006879 A2 beschrieben. Das Transportfahrzeug ist über die Führungsräder entlang der Führungsschiene zwangsgeführt.

Es hat sich bei diesen bekannten Lagersystemen nun als gravierendes Problem herausgestellt, dass sich durch Fertigungstoleranzen an der zweiten Führung bedingte Führungsungenauigkeiten unmittelbar auf die Führung des Transportfahrzeuges auswirken. Gleiches trifft beim Überfahren von Verbindungsstößen zwischen miteinander verbundenen Führungsschienen zu. Zunehmende Leistungsanforderungen an das Lagersystem verlangen hohe Fahrgeschwindigkeiten der Transportfahrzeuge, sodass diese Führungsungenauigkeiten in Form von Schwingungen in die Lagerregale eingeleitet werden. Je mehr Transportfahrzeuge nun in einem Lagersystem eingesetzt werden, desto mehr "schaukeln" sich die Schwingungen auf und besteht die Gefahr, dass sich die Stückgüter in den Lagerkanälen undefiniert verlagern. Die tatsächliche Lageposition des Stückgutes im Lagerkanal entspricht nicht mehr der Lageposition, in welcher das Stückgut von der Transportvorrichtung im Lagerkanal abgestellt wurde. Dies hat zur Folge, dass die Transportvorrichtung ein Stückgut, welches aus einem Lagerkanal auszulagern wäre, nicht ergreifen kann oder mit dem Stückgut kollidiert. Dies hat dramatische Konsequenzen für die Leistung und Verfügbarkeit eines Lagersystems.

Der vorliegenden Erfindung liegt die Aufgabe zugrunde, ein Lagersystem bereitzustellen, bei dem auch bei zunehmenden Leistungsanforderungen ein zuverlässiger Lagerbetrieb sichergestellt ist.

Die Aufgabe der Erfindung wird durch die Merkmale des Anspruches 1 gelöst.

Es können die Führungsräder unabhängig voneinander Führungsungenauigkeiten an den Führungsabschnitten der zweiten Führung ausgleichen. Von Vorteil ist, dass die durch Unebenheiten an der zweiten Führung und/oder an einem Verbindungsstoß zwischen miteinander verbundenen Führungen vorhandenen Führungsungenauigkeiten mittels der Ausgleichselemente kompensiert werden und das Transportfahrzeug selbst bei hohen Fahrgeschwindigkeiten (5 m/sec und mehr) kaum Schwingungen am / im Lagerregal anregt. Somit haben Fertigungstoleranzen an der zweiten Führung keine negativen Auswirkungen auf die Abstellgenauigkeit der Stückgüter in den Lagerkanälen. Es können die Führungen mit geringerer Fertigungsqualität und größeren Führungslängen montiert werden. Damit werden die Installationskosten für ein Lagersystem reduziert. Auch kann das Lagerregal dünnwandig gestaltet werden und können die Anschaffungskosten gesenkt werden. Das Transportfahrzeug kann in beliebiger Stückzahl in einem Lagersystem eingesetzt werden. Ein solches Lagersystem zeichnet sich durch eine hohe Verfügbarkeit aus.

Ein besonders kompakter und vor äußeren Einflüssen, wie Schmutz, Spritzwasser und dgl. geschützter Aufbau der Lagervorrichtung wird erreicht, wenn das Ausgleichselement eine Lagerhülse, eine Innenhülse und einen zwischen der Lagerhülse und Innenhülse angeordneten Elastomerring umfasst, wobei die Lagerhülse eine Bohrung ausbildet, in welcher die Radachse des Führungsrades gehalten ist.

Nach einer vorteilhaften Ausführung ist das Transportfahrzeug auf einer Fahrzeugseite mit zwei Führungseinheiten ausgestattet ist. Das Transportfahrzeug ist somit einseitig an einer ersten Führungsschiene geführt und kann sich bei vorhandenen Fertigungstoleranzen an der ersten Führungsschiene (Fertigungstoleranzen an der zweiten Führungsschiene haben keine Auswirkung auf die Führung des Transportfahrzeuges in senkrechter zur zweiten Führungsebene) relativ zu den Führungsschienen in senkrechter Richtung zur zweiten Führungsebene mitbewegen, ohne dabei Schwingungen im Lagerregal, welches der anderen Fahrzeugseite benachbart ist, welche keine Führungseinheit aufweist, zu verursachen.

In einer Ausführung der Erfindung ist es vorgesehen, dass je Fahrebene an je einer der paarweise angeordneten Führungsschienen und über die gesamte Länge der Führungsschiene eine Schleifleitungsanordnung befestigt ist, welche Schleifleitungsanordnung zur Energie- und/oder Datenversorgung des Transportfahrzeuges dient, und dass das Transportfahrzeug auf entweder auf der ersten Fahrzeugseite oder zweiten Fahrzeugseite mit zwei Führungseinheiten im Nahbereich des jeweiligen ersten Laufrades / zweiten Laufrades und zusätzlich mit Stromabnehmern zum Kontakt mit der Schleifleitungsanordnung ausgestattet ist.

Es erweist sich auch von Vorteil, wenn die Laufräder zusätzlich zwischen der Radnabe und dem Laufbelag ein elastisches Dämpfungselement aufweisen. Diese Maßnahme kann vorgesehen werden, um beim Überfahren von Verbindungsstößen zwischen miteinander verbundenen Führungsschienen Vibrationen am Transportfahrzeug und am Lagerregal zu vermeiden bzw. zu kompensieren. Dies ermöglicht wiederum, wie oben beschrieben, hohe Fahrgeschwindigkeiten für das Transportfahrzeug und die Verwendung von Lagerregalen in dünnwandiger Ausgestaltung. Man macht sich die elastische Verformung des Dämpfungselementes zu Nutze, um bei der Einwirkung von radialen Kräften auf das Laufrad eine federnde Wirkung zu erreichen. Somit werden "Schläge" von den Laufrädern gedämpft auf den Grundrahmen weitergeleitet. Damit wird auch ein Verrutschen des Stückgutes auf der Aufnahmeplattform des Transportfahrzeuges weitestgehend vermieden.

Nach einer Ausführung der Erfindung ist es möglich, dass zumindest zwei der Laufräder auf einer (angetriebenen) Antriebswelle befestigt sind und die Antriebswelle über Lagervorrichtungen am Grundrahmen gelagert ist, wobei die Lagervorrichtungen jeweils zumindest ein elastisch nachgiebiges Ausgleichselement aufweisen, welches derart angeordnet und gestaltet ist, dass die Laufräder in radialer Richtung relativ zum Grundrahmen beweglich sind.

Von Vorteil ist auch, wenn je zwei Laufräder auf einer Antriebswelle befestigt und die Antriebswellen je über Lagervorrichtungen am Grundrahmen gelagert sind, wobei die Lagervorrichtungen je Antriebswelle jeweils zumindest ein elastisch nachgiebiges Ausgleichselement aufweisen, welches derart angeordnet und gestaltet ist, dass die Laufräder in radialer Richtung relativ zum Grundrahmen beweglich sind. Dabei kann nur eine der Antriebswellen oder beide Antriebswellen angetrieben sein. Eine solche Ausführung ermöglicht die Verwendung konventioneller Laufräder, beispielsweise Laufräder mit einer Radnabe aus Metall oder faserverstärktem Kunststoff und einem Laufbelag aus verschleißfestem Kunststoff, da die Lagervorrichtungen für die Antriebswelle(n) mit dem elastischen Dämpfungselement versehen sind.

Nach einer anderen Ausführung der Erfindung ist es vorgesehen, dass die Laufräder jeweils eine Radnabe und einen koaxial zur Radnabe angeordneten Laufbelag und zusätzlich zwischen der Radnabe und dem Laufbelag ein elastisches Dämpfungselement aufweisen, wobei die Laufräder mit dem Laufbelag auf der ersten Führung abrollbar aufliegen. Nach dieser Ausgestaltung werden "Schläge" an den Laufrädern gedämpft, da diese mit dem elastischen Dämpfungselement versehen sind. Grundsätzlich ist auch eine Kombination mit den Lagervorrichtungen für die Antriebswelle(n) mit dem elastischen Dämpfungselement möglich.

Es erweist sich als günstig, wenn das elastische Dämpfungselement koaxial zur Radnabe angeordnet ist, wobei das elastische Dämpfungselement einen Innenring, einen Außenring, einen Mittelsteg, welcher den Innenring und Außenring verbindet, und Rippen, welche voneinander getrennt in axialer Richtung der Innen- und Außenringe verlaufen und welche den Innenring und Außenring verbinden. Ein solches elastisches Dämpfungselement kann besonders günstig hergestellt werden und zeichnet sich durch eine hohe Dämpfungseigenschaft aus.

Die Radnabe umfasst einen Innenring, einen Außenring, einen Mittelsteg, welcher den Innenring und Außenring verbindet, und Rippen, welche voneinander getrennt in axialer Richtung der Innen- und Außenringe verlaufen und welche den Innenring und Außenring verbinden. Eine solche Radnabe kann besonders günstig hergestellt werden und zeichnet sich durch seine hohe Formstabilität aus.

Eine besonders gute Dämpfungswirkung wird erreicht, wenn das elastische Dämpfungselement aus einem elastomeren Material mit einer Härte bis maximal 50 Shore A besteht.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt eines Lagersystems in einer ersten Ausführung mit Lagerregalen und einer Stückgut-Manipulationseinheit in Draufsicht auf eine Regalebene;
- Fig. 2: das Lagersystem in Ansicht gemäß der Linie II in Fig. 1;
- Fig. 3: das Lagersystem ohne der Stückgut-Manipulationseinheit nach Fig. 1 in Stirnansicht;
- Fig. 4: einen Ausschnitt eines Lagersystems in einer zweiten Ausführung mit Lagerregalen und einer Stückgut-Manipulationseinheit in Draufsicht auf eine Regalebene;
- Fig. 5: ein Transportfahrzeug mit einer Transportvorrichtung zum Einlagern von Stückgütern in Lagerkanäle und Auslagern von Stückgütern aus Lagerkanälen, in perspektivischer Ansicht;
- Fig. 6: eine Ausschnittsvergrößerung aus einem Lagerregal und des Transportfahrzeuges mit einer nicht unter den Schutzwortlaut der Ansprüche fallenden Ausführung einer Führungseinheit, gemäß Fig. 5, in Stirnsicht;
- Fig. 7: eine Ausschnittsvergrößerung von Fig. 6 mit dem Transportfahrzeug und einer erfindungsgemäßen Führungseinheit;
- Fig. 8: ein Laufrad in einer modifizierten Ausführung mit einem elastischen Dämpfungselement, geschnitten gemäß den Linien VIII in Fig. 9;
- Fig. 9: das Laufrad aus Fig. 8 in Ansicht von vorne;
- Fig. 10: das Laufrad aus Fig. 8 in Ansicht von hinten;
- Fig. 11: einen Grundrahmen für das Transportfahrzeug in einer modifizierten Ausführung der Lagervorrichtungen für die Antriebswellen mit je einem elastischen Dämpfungselement, in perspektivischer Ansicht;
- Fig. 12: einen Längsschnitt durch die Lagervorrichtung, Antriebswelle und Laufrad, gemäß der Ausführung in Fig. 11.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

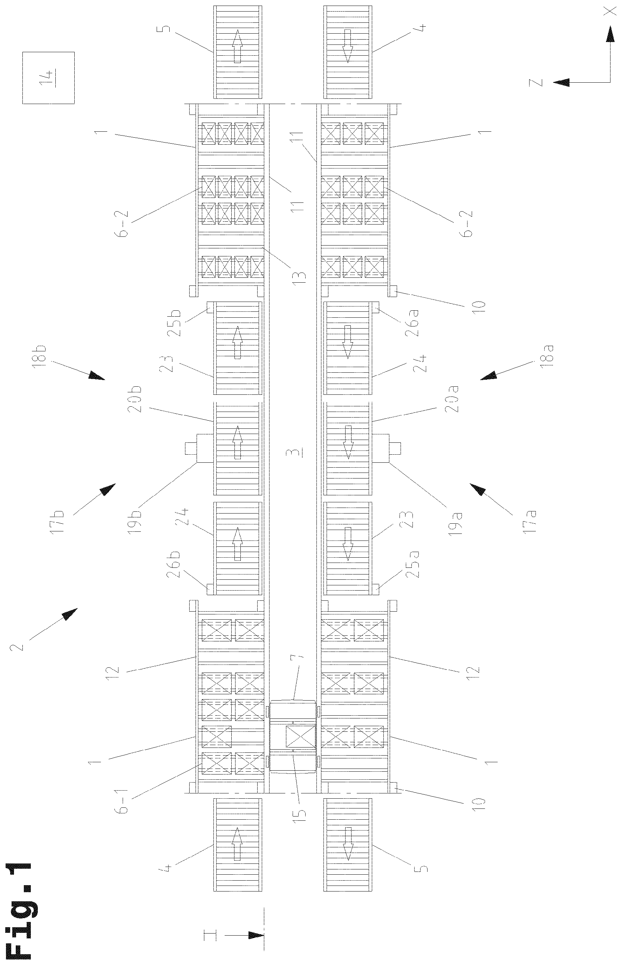

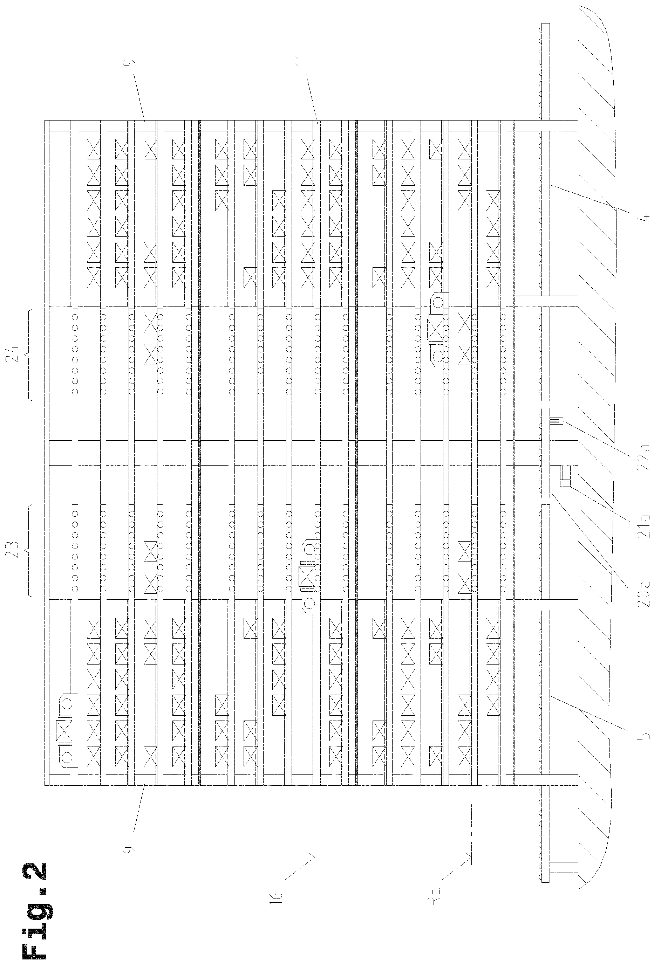

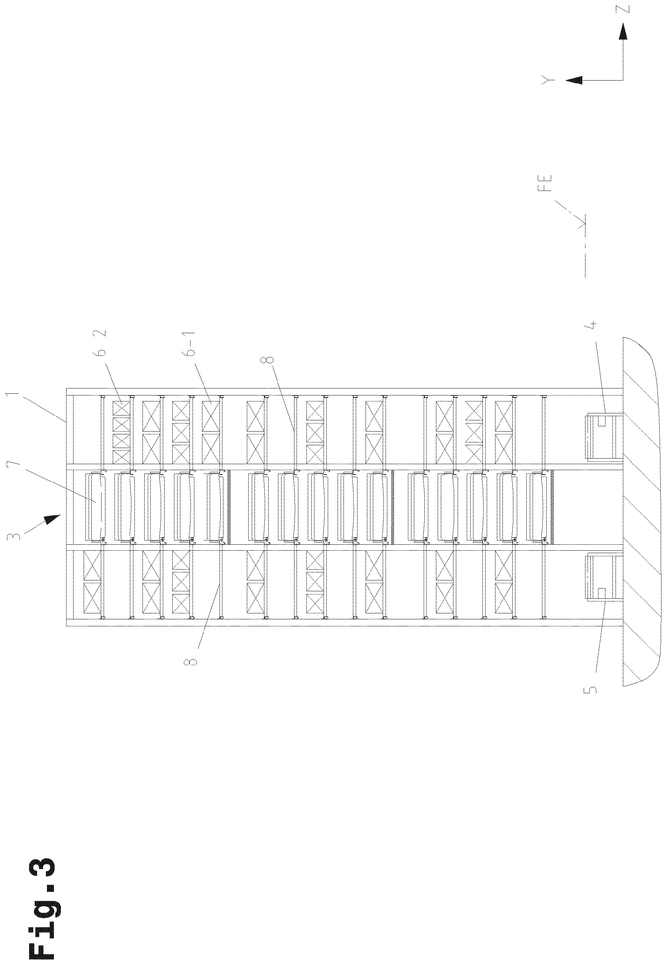

In den Fig. 1 bis 3 ist eine mögliche Ausführung eines Lagersystems gezeigt, welches parallel angeordnete Lagerregale 1, eine Stückgut-Manipulationseinheit 2, zumindest eine zwischen den Lagerregalen 1 und entlang der Stückgut-Manipulationseinheit 2 in einer x-Richtung verlaufende Regalgasse 3, eine an die Stückgut-Manipulationseinheit 2 angeschlossene Fördertechnik 4, 5 zum Antransport von Stückgütern 6-1, 6-2 und zum Abtransport von Stückgütern 6-1, 6-2 und zumindest ein Transportfahrzeug 7 zum Einlagern der Stückgüter 6-1, 6-2 in Lagerkanäle 8 bzw. Auslagern von Stückgütern 6-1, 6-2 aus den Lagerkanälen 8 umfasst. Im gezeigten Beispiel sind zwei Lagerregale 1 dargestellt. Im Rahmen der Erfindung können aber auch mehr als zwei Lagerregale 1 vorgesehen werden, wobei zwischen benachbarten Lagerregalen 1 jeweils eine Regalgasse 3 ausgebildet ist. Die Fördertechnik 4, 5 ist aus Gründen der besseren Übersicht in Fig. 1 nur abschnittsweise dargestellt.

Die Stückgüter 6-1, 6-2 sind Kartons (Packeinheiten) oder Ladehilfsmittel (LHM), wie Tablar oder Behälter, mittels welchen Einzelartikel oder je Ladehilfsmittel zumindest ein Karton gefördert und gelagert werden können. In den Kartons sind Einzelartikel, beispielweise aus der Textilbranche oder Lebensmittelindustrie bevorratet.

Die Lagerregale 1 können jeweils der Regalgasse 3 benachbarte, vertikale vordere Regalsteher 9 und von der Regalgasse 3 entfernte, vertikale hintere Regalsteher 10 umfassen. Die vorderen Regalsteher 9 sind mit in Richtung der Regalgasse 3 horizontal verlaufenden vorderen Längstraversen 11 und die hinteren Regalsteher 10 mit in Richtung der Regalgasse 3 horizontal verlaufenden hinteren Längstraversen 12 verbunden. Zwischen den Längstraversen 11, 12 können Querträger 13 vorgesehen werden, welche sich in Tiefenrichtung eines Lagerregales 1 (z-Richtung) erstrecken. In diesem Fall bilden die Querträger 13 obenseitig eine Lagerfläche bzw. Lagerkanäle 8 aus. Ein Stückgut 6-1, 6-2 lagert je nach Breitenabmessung auf zumindest zwei Querträgern 13.

Möglich wäre aber auch eine (nicht gezeigte) Ausführung, bei der die Lagerregale 1 jeweils vordere Regalsteher, hintere Regalsteher, an diesen befestigte vordere Längstraversen und hintere Längstraversen sowie einen je Regalebene zwischen den Längstraversen angeordneten und an diesen befestigten Lagerboden, beispielsweise eine Lagerplatte oder ein Gitter, umfassen. Der Lagerboden bildet obenseitig eine Lagerfläche aus, die sich je Regalebene in Tiefenrichtung (z-Richtung) zwischen der vorderen Längstraverse und hinteren Längstraversen erstreckt. In Längenrichtung (x-Richtung) des Lagerregales erstreckt sich die Lagerfläche je Regalebene zumindest zwischen den aufeinander folgenden vorderen Regalstehern und hinteren Regalstehern. In diesem Fall bildet der Lagerboden eine Lagerfläche bzw. Lagerkanäle 8 aus.

Somit bildet jedes Lagerregal 1 in übereinander liegenden Regalebenen (RE) jeweils nebeneinander eine Vielzahl von Lagerkanälen 8 aus, welche sich in z-Richtung zwischen den voneinander abgewandten Längsseiten des Lagerregales 1 erstrecken.

Jeder Lagerkanal 8 kann abhängig von einer Längenabmessung der Stückgüter 6-1, 6-2, welche in den Lagerkanälen 8 zwischengelagert werden, eine entsprechende Anzahl an Stückgütern 6-1, 6-2 aufnehmen. Die Längenabmessung verläuft dabei in Richtung der Längserstreckung des Lagerkanales 8, wenn das Stückgut 6-1, 6-2 im Lagerkanal 8 eingelagert wurde. Die Breitenabmessung der Stückgüter 6-1, 6-2 hingegen, wirkt sich auf die Anzahl der nebeneinander liegenden Lagerkanäle 8 aus. Die Breitenabmessung verläuft dabei quer zur Längserstreckung des Lagerkanales 8, wenn das Stückgut 6-1, 6-2 im Lagerkanal 8 eingelagert wurde. Aus Gründen der besseren Übersicht sind die Stückgüter 6-1, 6-2 in Fig. 1 aber mit gleicher Breitenabmessung eingetragen.

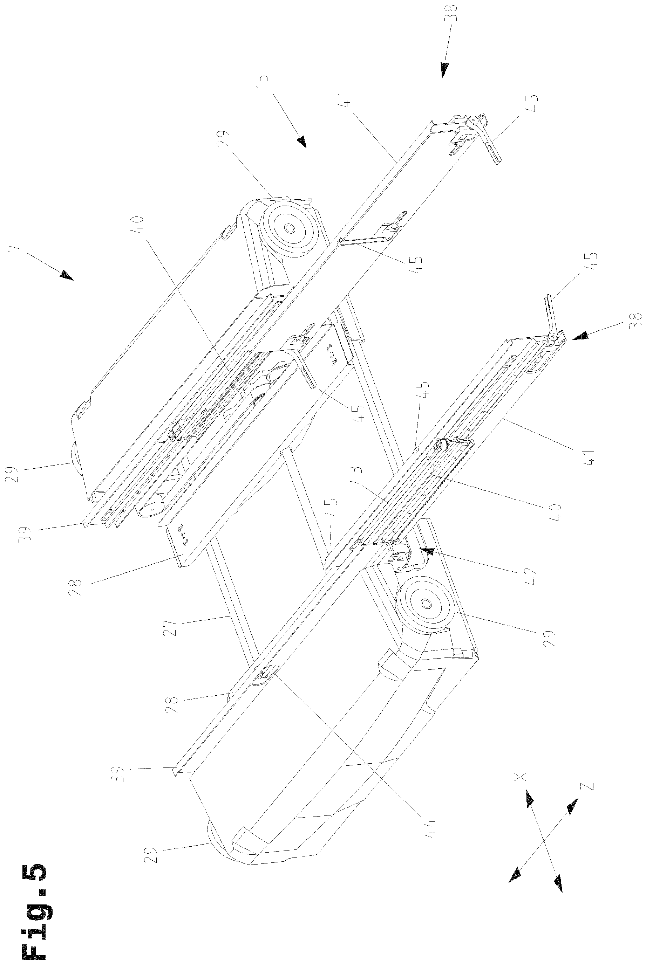

Es sei erwähnt, dass der Begriff "Lagerkanal" so zu verstehen ist, dass dieser von einer elektronischen Steuereinheit 14 "fiktiv" als Stellfläche festgelegt wird. Während die "ausnutzbare" Lagertiefe der Lagerkanäle 8 nicht variiert, kann eine Lagerbreite abhängig von der Breitenabmessung der Stückgüter 6-1, 6-2 variieren. So können über eine noch näher zu beschreibende Transportvorrichtung 15 (Fig. 5) in den Lagerkanälen 8 jeweils in Tiefenrichtung (z-Richtung) an hintereinander liegenden Tiefenpositionen Stückgüter 6-1, 6-2 in unterschiedlicher Anzahl eingelagert werden.

Das Lagersystem umfasst nach gezeigter Ausführung in übereinander liegenden (horizontalen) Fahrebenen 16 vor dem Lagerregal 1 bewegbare und von der Steuereinheit 14 unabhängig voneinander ansteuerbare Transportfahrzeuge 7 zum Einlagern der Stückgüter 6-1, 6-2 in die Lagerkanäle 8 bzw. Auslagern von Stückgütern 6-1, 6-2 aus den Lagerkanälen 8. Es kann vorgesehen werden, dass jeder Regalebene (RE) zumindest ein Transportfahrzeug 7 zugeordnet ist. Somit bedient ein Transportfahrzeug 7 über die Transportvorrichtung 15 eine Regalebene. Die Transportvorrichtung 15 kann in einer Querrichtung (z-Richtung) doppelseitig ein oder mehrere Stückgüter 6-1, 6-2 in die Lagerkanäle 8 einlagern bzw. aus den Lagerkanälen 8 auslagern. Die Fahrebenen 16 und Regalebenen (RE) liegen im gezeigten Ausführungsbeispiel im Wesentlichen auf gleicher Höhenebene, wobei die in Längsrichtung der Regalgasse 3 (x-Richtung) verlaufenden und paarweise einander gegenüberliegenden Längstraversen 11 jeweils eine Fahrebene 16 ausbilden, entlang welcher das Transportfahrzeug 7 bewegt wird. Die vorderen Längstraversen 11 bilden damit Führungsschienen für das Transportfahrzeug 7, welche mit dem Lagerregal 1 verbunden sind.

Es können aber nach einer anderen nicht gezeigten Ausführung auch weniger Transportfahrzeuge 7 als Regalebenen (RE) vorhanden sein, wenn das Transportfahrzeug 7 stockweise übereinander angeordnete Transportvorrichtungen 15 umfasst. Die Transportvorrichtungen 15 können von der Steuereinheit 14 unabhängig voneinander angesteuert werden, wovon eine erste Transportvorrichtung 15 in einer Querrichtung (z-Richtung) auf einer ersten Regalebene (RE) ein oder mehrere Stückgüter 6-1, 6-2 in einen Lagerkanal 8 einlagern bzw. aus einem Lagerkanal 8 auslagern kann und eine zweite Transportvorrichtung 15 in einer Querrichtung (z-Richtung) auf einer zweiten Regalebene (RE) ein oder mehrere Stückgüter 6-1, 6-2 in einen Lagerkanal 8 einlagern bzw. aus einem Lagerkanal 8 auslagern kann. Somit kann ein Transportfahrzeug 7 beispielweise über zwei Transportvorrichtungen 15 mehr als eine Regalebene, beispielweise zwei Regalebenen bedienen. Die Fahrebenen 16 liegen zwar nicht mehr in jeder Regalebene (RE), aber im Wesentlichen auf gleicher Höhenebene jeder zweiten Regalebene (RE), wobei die in Längsrichtung der Regalgasse 3 (x-Richtung) verlaufenden und paarweise einander gegenüberliegenden Längstraversen 11 jeweils eine Fahrebene 16 ausbilden, entlang welcher das Transportfahrzeug 7 bewegt wird.

Wird andererseits eine spezielle Hebevorrichtung eingesetzt, kann die Anzahl der Transportfahrzeuge 7 ebenso geringer sein als die Anzahl an Fahrebenen 16. Dabei können die Transportfahrzeuge 7 zwischen den Fahrebenen 16 umgesetzt werden. Eine solche Hebevorrichtung ist beispielweise aus der WO 2012/106744 A1 oder WO 2012/106745 A1 bekannt.

Die in den Fig. 1 bis 3 gezeigte Stückgut-Manipulationseinheit 2 ist zwischen einander gegenüber liegenden Stirnseiten der Lagerregale 1 angeordnet und umfasst eine erste Stückgut-Hebevorrichtung 17a, eine erste Puffervorrichtung 18a, eine zweite Stückgut-Hebevorrichtung 17b und eine zweite Puffervorrichtung 18b.

Die Stückgut-Hebevorrichtungen 17a, 17b sind ortsfest aufgestellt und umfassen jeweils eine über einen Hubantrieb 19a, 19b heb- und senkbare Transportvorrichtung 20a, 20b. Der Hubantrieb 19a, 19b umfasst einen schematisch dargestellten Antriebsmotor 21a, 21b, welcher mit der Steuereinheit 14 verbunden ist. Bevorzugt sind die Transportvorrichtungen 20a, 20b jeweils auf einem Vertikalmast gelagert. Die Transportvorrichtungen 20a, 20b umfassen jeweils eine über einen Förderantrieb 22a, 22b antreibbare Fördervorrichtung mit einer parallel zur Regalgasse 3 verlaufenden Förderrichtung, wie durch die Pfeile in Fig. 1 angedeutet. Der Förderantrieb ist mit der Steuereinheit 14 verbunden. Die Fördervorrichtungen sind beispielweise ein Rollenförderer, Gurtförderer.

Die Puffervorrichtungen 18a, 18b umfassen jeweils in Richtung der Regalgasse 3 an einer Seite der Stückgut-Hebevorrichtung 17a, 17b und in zumindest einigen der Regalebenen (RE) erste Bereitstellvorrichtungen 23 für das Zwischenpuffern eines oder mehrerer einzulagernder Stückgüter 6-1, 6-2 sowie in Richtung der Regalgasse 3 an der anderen Seite der zweiten Stückgut-Hebevorrichtung 17a, 17b und in zumindest einigen der Regalebenen (RE) zweite Bereitstellvorrichtungen 24 für das Zwischenpuffern eines oder mehrerer auszulagernder Stückgüter 6-1, 6-2. Wie gezeigt, sind die ersten Bereitstellvorrichtungen 23 und zweiten Bereitstellvorrichtungen 24 jeweils in allen Regalebenen (RE) angeordnet. Die ersten Bereitstellvorrichtungen 23 bilden einen ersten Pufferbereich, einen so genannten Einlager-Pufferbereich und die zweiten Bereitstellvorrichtungen 24 bilden einen zweiten Pufferbereich, einen so genannten Auslager-Pufferbereich, wobei jeder Stückgut-Hebevorrichtung 17a, 17b der erste und zweite Pufferbereich zugeordnet ist. Die Bereitstellvorrichtungen 23, 24 weisen nach dieser Ausführung jeweils eine über einen Förderantrieb 25a, 25b, 26a, 26b antreibbare Fördervorrichtung, beispielweise Rollenförderer, auf. Die Bereitstellfördervorrichtungen 23, 24 bilden demnach motorisch angetriebene Bereitstellfördervorrichtungen.

Wie auch aus Fig. 1 ersichtlich, verlaufen die vorderen Längstraversen 11 entlang der Lagerregale 1 und der Stückgut-Manipulationseinheit 2 (Stückgut-Hebevorrichtung 17a, 17b und Puffervorrichtungen 18a, 18b) in Längsrichtung der Regalgasse 3 (x-Richtung) und in zumindest einigen der Regalebenen (RE), bevorzugt in jeder Regalebene (RE). Die Transportfahrzeuge 7 können zum Einlagern von Stückgütern 6-1, 6-2 und Auslagern von Stückgütern 6-1, 6-2 entlang der Längstraversen 11 verfahren werden, wobei einerseits über deren Transportvorrichtung 15 auszulagernde Stückgüter 6-1, 6-2 von den Lagerkanälen 8 entnommen und auf die Bereitstellvorrichtungen 24 der Puffervorrichtung 18a oder Puffervorrichtung 18b abgeben werden können, und andererseits über deren Transportvorrichtung 15 einzulagernde Stückgüter 6-1, 6-2 von den Bereitstellvorrichtungen 23 der Puffervorrichtung 18a oder Puffervorrichtung 18b entnommen und auf Lagerkanäle 8 abgeben werden können.

Im Detail wird das Einlagern und Auslagern von Stückgütern 6-1, 6-2 mittels der Fördertechniken 4, 5, der Stückgut-Manipulationseinheit 2 und der Transportfahrzeuge 7 in der WO 2013/090970 A2 beschrieben.

Die Fördertechniken 4, 5 sind aus Gründen der besseren Übersicht in Fig. 1 nur abschnittsweise dargestellt. Die Fördertechnik 4 zum Antransport von Stückgütern 6-1, 6-2 zur Stückgut-Hebevorrichtung 17a, 17b und die Fördertechnik 5 zum Abtransport von Stückgütern 6-1, 6-2 von der Stückgut-Hebevorrichtung 17a, 17b verlaufen parallel zur Regalgasse 3 unterhalb der Lageregale 1 und bilden eine Fördertechnikebene (FE) aus.

Die heb- und senkbare Transportvorrichtung 20a, 20b kann auf Höhe der Fördertechnikebene (FE) zwischen die einander gegenüber liegenden Fördertechniken 4, 5 und auf Höhe der Regalebenen (RE) zwischen die einander gegenüber liegenden Bereitstellvorrichtungen 23, 24 positioniert werden, um einzulagernde/auszulagernde Stückgüter 6-1, 6-2 zwischen der Transportvorrichtung 20a, 20b und der jeweiligen Fördertechnik 4, 5 sowie zwischen der Transportvorrichtung 20a, 20b und der jeweiligen Bereitstellvorrichtung 23, 24 der ersten/zweiten Puffervorrichtung 18a, 18b zu fördern.

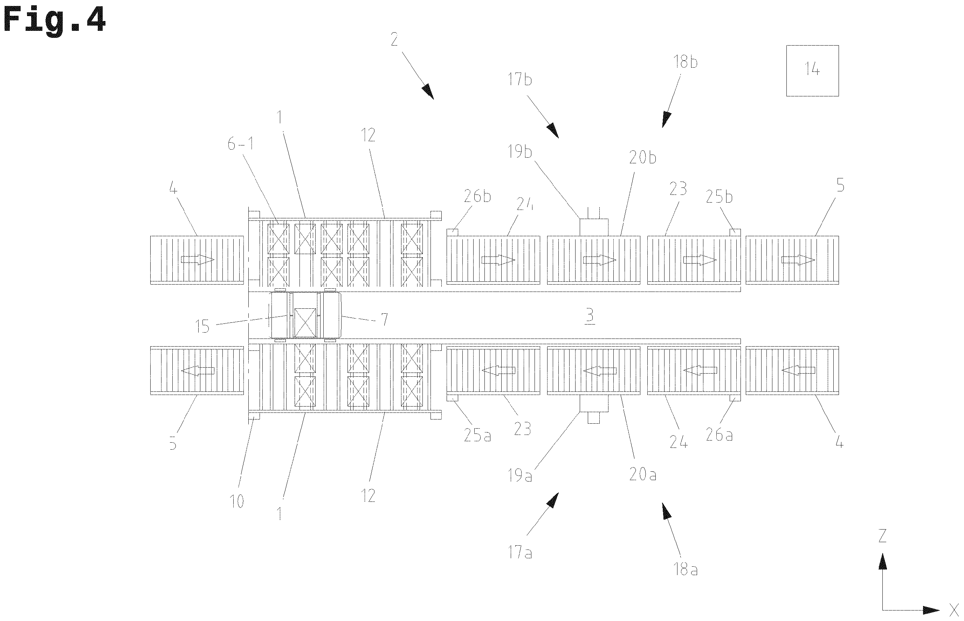

Nach einer anderen Ausführung, wie in Fig. 4 gezeigt, ist die oben beschriebene Stückgut-Manipulationseinheit 2 stirnseitig vor den Lagerregalen 1 angeordnet. Die vorderen Längstraversen 11 (Führungsschienen) verlaufen wiederum entlang der Lagerregale 1 und der Stückgut-Manipulationseinheit 2 (Stückgut-Hebevorrichtung 17a, 17b und Puffervorrichtungen 18a, 18b) in Längsrichtung der Regalgasse 3 (x-Richtung) und in zumindest einigen der Regalebenen (RE), bevorzugt in jeder Regalebene (RE). Das Einlagern und Auslagern von Stückgütern 6-1, 6-2 kann auf oben beschriebene Weise erfolgen.

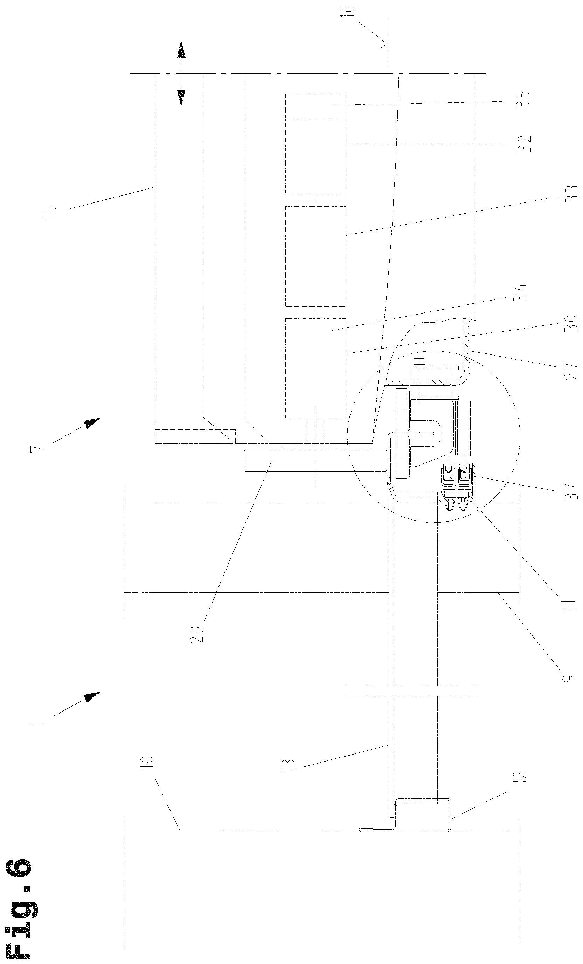

In den Fig. 5 und 6 ist eine mögliche Ausgestaltung des Transportfahrzeuges 7 gezeigt, welches als Einebenenregalbediengerät ausgebildet ist.

Das Transportfahrzeug 7 weist, wie auch im Zusammenhang mit den vorhergehenden Fig. ersichtlich, einen Grundrahmen 27, eine Aufnahmeplattform 28, Laufräder 29, einen Fahrantrieb mit zumindest einem Antriebsmotor 30 zum Antrieb mindestens eines Laufrades 29, zumindest eine Führungseinheit, einen Stellantrieb mit zumindest einem Antriebsmotor 32 zum Ausfahren / Einfahren der Transportvorrichtung 15, eine Steuerelektronik 33 sowie die Transportvorrichtung 15, beispielweise zur Einlagerung und Auslagerung von Stückgütern 6-1, 6-2 in ein bzw. aus einem Lagerregal 1 auf. Die Erfassung der Fahrposition des Transportfahrzeuges 7 in x-Richtung kann über eine geeignete Sensorik erfolgen. Vorzugsweise ist ein Sensor 34 vorgesehen, welcher durch einen Drehgeber gebildet und am Antriebsmotor 30 angeordnet ist. Die Erfassung des Ausfahrweges der Transportvorrichtung 15 in z-Richtung kann ebenso über eine geeignete Sensorik erfolgen. Vorzugsweise ist ein Sensor 35 vorgesehen, welcher durch einen Drehgeber gebildet und am Antriebsmotor 32 angeordnet ist.

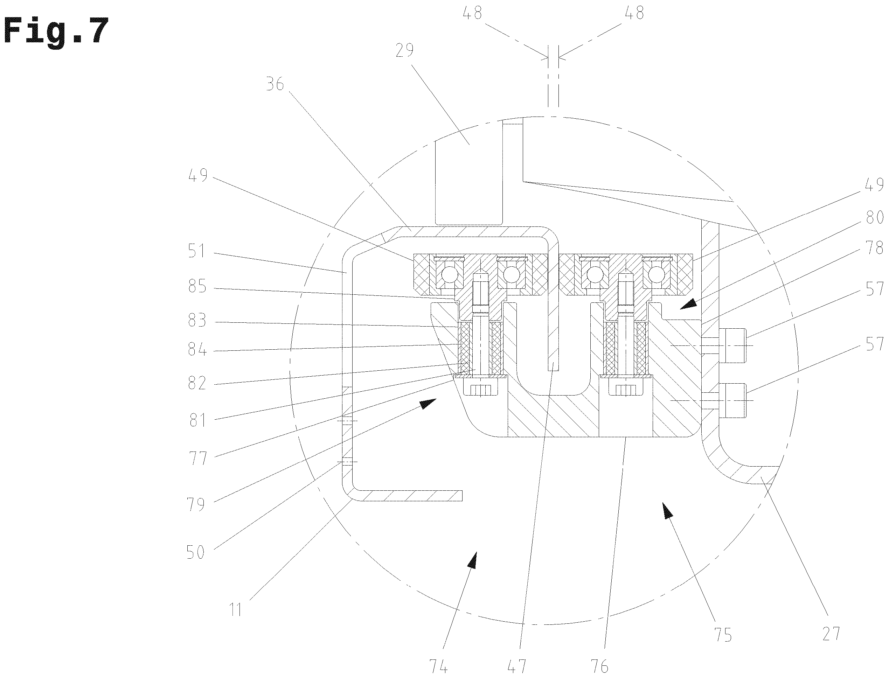

Die Laufräder 29 sind am Grundrahmen 27 (um horizontale Achse) drehbar gelagert und liegen auf einer horizontalen ersten Führung 36 (Fig. 7) abrollbar auf, wobei sich die erste Führung 36 parallel zur Längsrichtung des Lagerregales 1 und in einer parallel zur Fahrebene 16 verlaufenden ersten Führungsebene erstreckt. Die erste Führung 36 wird bevorzugt von der vorderen Längstraverse 11 ausgebildet.

Wie in Fig. 6 schematisch gezeigt, kann die Energie- und/oder Datenversorgung der Transportfahrzeuge 7, insbesondere der Antriebsmotoren 30, 32 und der Steuerelektronik 33 über eine Schleifleitungsanordnung 37 erfolgen, welche je Fahrebene 16 an je einer der vorderen Längstraversen 11 (Führungsschienen) befestigt ist und sich über die gesamte Länge der Längstraverse 11 erstreckt. Das Transportfahrzeug 7 umfasst Stromabnehmer und kontaktiert damit Schleifleitungen der Schleifleitungsanordnung 37 zur Energie- und/oder Datenversorgung.

Die Transportvorrichtung 15 (Lastaufnahmevorrichtung), wie sie in Fig. 5 näher dargestellt ist, kann parallel zueinander auf dem Tragrahmen 27 angeordnete und aus einer Ausgangsstellung nach beiden Richtung synchron ausfahrbare Teleskopiereinheiten 38 umfassen, sodass in die zu beiden Seiten des Transportfahrzeuges 7 angeordneten Lagerregale 1 Stückgüter 6-1, 6-2 eingelagert bzw. Stückgüter 6-1, 6-2 ausgelagert werden können.

Die Teleskopiereinheiten 38 weisen jeweils einen Grundrahmen 39 und relativ gegenüber dem Grundrahmen 39 horizontal in einer Richtung (z-Richtung) ein- bzw. ausfahrbare Schlitten 40, 41 auf. Die Teleskopiereinheiten 38 bilden Teleskoparme. Der erste Schlitten 40 ist über eine Führungsanordnung am Grundrahmen 39 verschiebbar gelagert und der zweite Schlitten 41 ist über eine Führungsanordnung am ersten Schlitten 40 verschiebbar gelagert. Der erste Schlitten 40 kann mit Hilfe einer schematisch dargestellten Antriebsvorrichtung 42 relativ gegenüber dem Grundrahmen 39, beispielweise einer Zahnriemen- und Zahnleistenanordnung gegenüber dem Grundrahmen 39 bewegt werden. Wie in Fig. 5 weiters ersichtlich, ist ein erster Riemen 43 um eine am ersten Schlitten 40 gelagerte (vordere) erste Rolle umgelenkt und mit seinem ersten Ende am Grundrahmen 39 und mit seinem zweiten Ende am zweiten Schlitten 41 befestigt. Ein zweiter Riemen 44 ist um eine am ersten Schlitten 40 gelagerte (hintere) zweite Rolle umgelenkt und mit seinem ersten Ende am Grundrahmen 39 und mit seinem zweiten Ende am zweiten Schlitten 41 befestigt. Wird der erste Schlitten 40 durch die Antriebsvorrichtung 42 bewegt, so wird auch der zweite Schlitten 41 über die Riemen 43, 44 mitbewegt, also entweder ein- bzw. ausgefahren.

Die zweiten Schlitten 41 umfassen jeweils Transportorgane 45 zum Transport von Stückgütern 6-1, 6-2 zwischen dem Lagerkanal 8 und dem Transportfahrzeug 7. Die äußeren Transportorgane 45 sind in den gegenüber liegenden Endbereichen des zweiten Schlittens 41 und das innere Transportorgan 45 ist mittig zwischen den äußeren Transportorganen 45 angeordnet, wobei jedes Transportorgan 45 mit einem elektrischen Antriebsmotor gekuppelt ist und über diesen zwischen einer Ausgangsstellung und Betätigungsstellung bewegbar sind.

Wie in Fig. 5 auch ersichtlich, kann die Aufnahmeplattform durch in z-Richtung verlaufende Stückgutauflagen 28 gebildet sein. Auf der Aufnahmeplattform 28 können ein einziges Stückgut 6-1 mit der ersten Längenabmessung oder auch mehrere Stückgüter 6-2 mit der zweiten Längenabmessung transportiert werden. Andererseits ist es auch in einer nicht gezeigten Ausführung möglich, dass die Aufnahmeplattform eine motorisierte Fördervorrichtung umfasst, welche eine parallel zur z-Richtung verlaufende Förderrichtung aufweist. Die Fördervorrichtung ist beispielweise ein Gurtförderer oder Rollenförderer, welche im Wesentlichen mit der Stellgeschwindigkeit der Teleskopeinheiten synchronisiert betrieben wird.

In der Fig. 7 ist eine erfindungsgemäße Ausführung für eine Führungseinheit 74 gezeigt, welche über eine Lagervorrichtung 75 am Grundrahmen 27 des Transportfahrzeuges 7 im Wesentlichen starr montiert ist. Diese umfasst auf einer zweiten Führung 47 an voneinander abgewandten und parallel verlaufenden Führungsabschnitten 48 abrollbar anliegende Führungsräder 49. Die Führungsräder 49 sind an der Lagervorrichtung 75 (um vertikale Achse) drehbar gelagert.

Das Transportfahrzeug 7 kann auf der Fahrbewegung entlang des Lagerregales 1 über die Führungseinheit 74 quer, insbesondere in senkrechter Richtung zur zweiten Führungsebene geführt bewegt werden. Die zweite Führung 47 wird bevorzugt von der vorderen Längstraverse 11 ausgebildet. Sind die Führungsschienen (Längstraversen 11) je Fahrebene 16 paarweise angeordnet, so weist eine der Führungsschienen je Fahrebene 16 die erste Führung 36 und zweite Führung 47 auf.

Demnach umfasst die vordere Längstraverse 11 sowohl die erste Führung 36 als auch die zweite Führung 47. Es ist aber im Rahmen der Erfindung auch möglich, dass die erste Führung 36 und die zweite Führung 47 getrennt ausgebildet und an unterschiedlichen Längstraversen vorgesehen sind.

Im Detail umfasst die vordere Längstraverse 11 einen ersten Führungsschenkel, einen zweiten Führungsschenkel, einen Montageschenkel und einen Profilschenkel. Der Montageschenkel ist durch einen vertikalen unteren Profilschenkel und einen von diesem in Richtung zum ersten Führungsschenkel abgewinkelten oberen Profilschenkel gebildet. Der erste Führungsschenkel bildet die horizontale erste Führung 36 bzw. horizontale Lauffläche aus, an welcher die Laufräder 29 abrollbar anliegen. Der zweite Führungsschenkel bildet die einander gegenüberliegenden vertikalen Führungsabschnitte 48 bzw. vertikalen Führungsflächen aus, an welchen die Führungsräder 49 abrollbar anliegen. Der Montageschenkel bildet in Längsrichtung der Längstraverse 11 in einem Rasterabstand angeordnete Montagebohrungen 50 zur Befestigung der vordere Längstraverse 11 an dem Lagerregal 1 bzw. den vorderen Regalstehern 9 aus. Wie auch in Fig. 7 schematisch eingetragen, bildet die vordere Längstraverse 11 vom abgewinkelten oberen Profilschenkel bis in den vertikalen unteren Profilschenkel schlitzförmige Ausnehmungen 51 aus, in welche die Querträger 13 des Lageregales 1 einhängbar bzw. einhakbar sind. Die schlitzförmigen Ausnehmungen 51 sind in regelmäßigen Abständen entlang der Längstraversen 11 angeordnet.

Die Lagervorrichtung 75 weist einen Lagerkörper 76 mit einem ersten Lagerarm 77 und einem zweiten Lagerarm 78, ein elastisch nachgiebiges erstes Ausgleichselement 79 und ein elastisch nachgiebiges zweites Ausgleichselement 80 auf. Der Lagerkörper 76 ist mittels eines Befestigungselementes 57, beispielweise Schrauben, mit dem Grundrahmen 27 biegesteif (starr) verbunden. Der Lagerkörper 76 weist hierzu Gewindebohrungen auf. Das erste Führungsrad 49 ist mit seiner Radachse 81 über das elastisch nachgiebige erste Ausgleichselement 79 am ersten Lagerarm 77 und das zweite Führungsrad 49 ist mit seiner Radachse 81 über das elastisch nachgiebige zweite Ausgleichselement 80 am zweiten Lagerarm 78 gelagert, sodass die Führungsräder 49 relativ zum Lagerkörper 76 bzw. relativ zum Grundrahmen 27 beweglich sind.

In der gezeigten Ausführung kann das erste Ausgleichselement 79 eine Lagerhülse 82, eine Innenhülse 83 und einen zwischen der Lagerhülse 82 und Innenhülse 83 angeordneten Elastomerring 84 bzw. Gummiring umfassen, wobei die Lagerhülse 82 eine Bohrung ausbildet, in welcher die Radachse 81 (Lagerachse) des Führungsrades 49 eingesteckt ist. Die Lagerhülse 82 und Innenhülse 83 sind bevorzugt metallische Tiefziehteile. Die Radachse 81 ist ein Lagerbolzen, welcher einen Lagerabschnitt und einen Gewindeabschnitt ausbildet. Der Lagerabschnitt dient der Lagerung des ersten Ausgleichselementes 79, insbesondere der Lagerhülse 82. Der Gewindeabschnitt dient der Befestigung des Führungsrades 49. Das Führungsrad 49 weist hierzu einen Lagerbund 85 auf, welcher mit einer Gewindebohrung versehen ist. Der Lagerbund 85 ist in einer Freistellung in den Lagerarmen 77, 78 teilweise aufgenommen. Gleichermaßen ist auch das zweite Ausgleichselement 80 aufgebaut und angeordnet. Das Ausgleichselement 79, 80 bildet ein Gummilager, welches in einer Bohrung im ersten Lagerarm 77 bzw. zweiten Lagerarm 78 eingepresst ist.

In einer anderen nicht gezeigten Ausführung, wäre es auch möglich, dass das erste Ausgleichselement 79 zwischen dem Lagerbund 85 und der Lagerung des ersten Führungsrades 49 bzw. das zweite Ausgleichselement 80 zwischen dem Lagerbund 85 und der Lagerung des zweiten Führungsrades 49 angeordnet sind.

Es sei noch erwähnt, dass die Führungsräder 49 jeweils eine Lagerung (Wälzlager), eine Radnabe und einen elastisch nachgiebigen Laufbelag aus Kunststoff, wie Polyurethan, aufweisen. Der Laufbelag ist aufgrund seiner elastischen Eigenschaft grundsätzlich dazu geeignet Unebenheiten in begrenztem Ausmaß auszugleichen, jedoch darf der Laufbelag nicht zu weich sein, da ansonsten der Verschleiß zu hoch wäre. Es hat sich nun in der Praxis gezeigt, dass die Kombination von Führungsrädern 49 mit einem elastisch nachgiebigen Laufbelag und der Anordnung von elastisch nachgiebigen Ausgleichelementen 79, 80 hervorragende Dämpfungseigenschaften erreicht werden, sodass Unebenheiten an der ersten Führung 36 bzw. zweiten Führung 47 keine Auswirkung auf die Laufruhe des Transportfahrzeuges 7 haben. Der Kunststoff des Laufbelages des ersten Führungsrades 49 und zweiten Führungsrades 49 ist mit einer Härte im Bereich von 70 Shore A bis 100 Shore A, insbesondere 93 Shore A (DIN 53505) ausgeführt, sodass eine präzise Führung erreicht wird. Das Ausgleichselement 79, 80 ist mit einer Härte im Bereich von 30 Shore A bis 50 Shore A (DIN 53505) ausgeführt, sodass eine ausreichend präzise Führung und im Verhältnis zum Führungsrad 49 eine hohe Dämpfungswirkung erreicht wird.

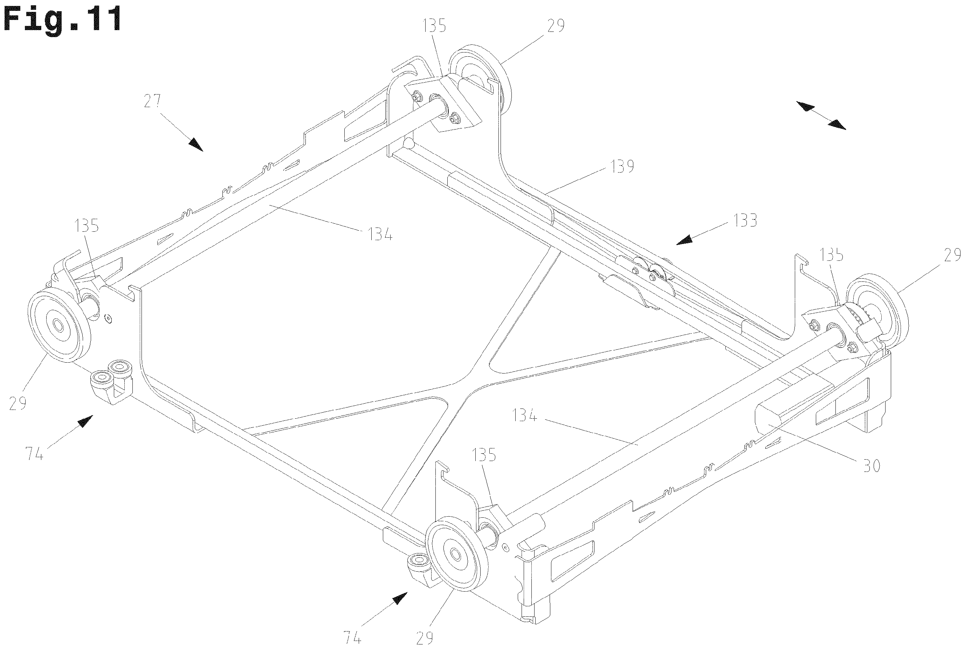

Ferner sei erwähnt, dass das Transportfahrzeug 7 auf einer Fahrzeugseite auch mit zwei Führungseinheiten 74, wie oben beschrieben, ausgestattet werden kann. Dies ist in Fig. 11 ersichtlich.

Wie sich aus dem oben Beschriebenen zeigt, werden die durch Unebenheiten an der zweiten Führung und/oder an einem Verbindungsstoß zwischen miteinander verbundenen Führungen vorhandenen Führungsungenauigkeiten mittels des Ausgleichselementes kompensiert, so dass selbst bei hohen Fahrgeschwindigkeiten der Transportfahrzeuge 7 (Stückgutaufnahmevorrichtungen) kaum Schwingungen am / im Lagerregal 1 angeregt werden.

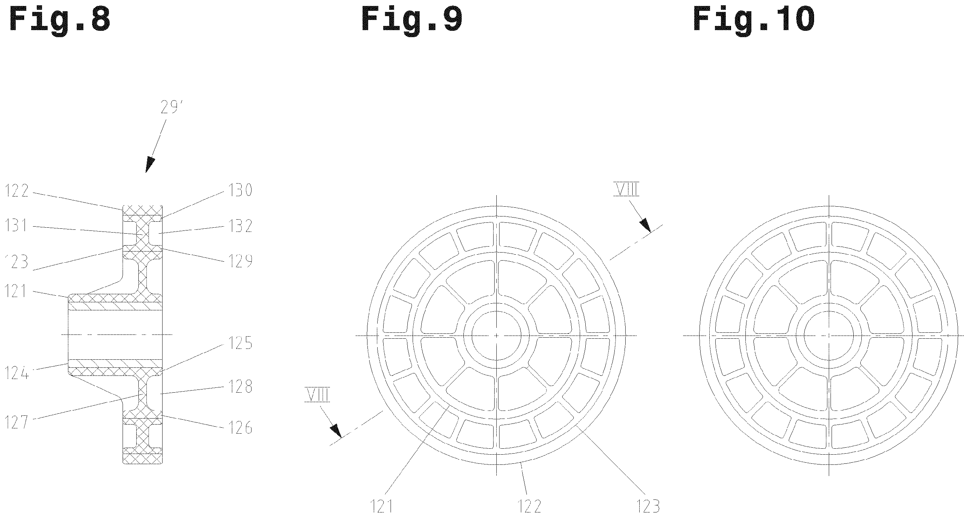

In den Fig. 8 bis 10 ist eines der Laufräder 29' in einer modifizierten Ausführung gezeigt. Dieses modifizierte Laufrad 29' kann anstatt der Laufräder 29, wie in Fig. 5 eingetragen, eingesetzt werden.

Das modifizierte Laufrad 29` umfasst eine Radnabe 121 und einen koaxial zur Radnabe 121 angeordneten Laufbelag 122 und zusätzlich zwischen der Radnabe 121 und dem Laufbelag 122 ein (durch radiale Kräfte federnd nachgiebiges) elastisches Dämpfungselement 123. Das elastische Dämpfungselement 123 ist koaxial zur Radnabe 121 angeordnet. Die Laufräder 29` liegen mit dem Laufbelag 122 auf der ersten Führung 36 (siehe beispielweise Fig. 7) abrollbar auf. Das Laufrad 29' kann auch in der Durchgangsbohrung der Radnabe 121 eine Lagerbuchse 124 umfassen. Die Laufräder 29' werden an einer Antriebswelle (siehe Fig. 11) befestigt, bevorzugt an den Enden der Antriebswelle aufgepresst.

Die Radnabe 121 umfasst einen Innenring 125, einen Außenring 126, einen Mittelsteg 127 und Rippen 128. Der Mittelsteg 127 und die Rippen 128 verbinden den Innenring 125 und Außenring 126. Bevorzugt ist der Innenring 125 länger als der Außenring 126 ausgebildet. Die radial ausgerichteten Rippen 128 verlaufen voneinander getrennt in axialer Richtung der Innen- und Außenringe 125, 126.

Das elastische Dämpfungselement 123 umfasst einen Innenring 129, einen Außenring 130, einen Mittelsteg 131 und Rippen 132. Der Mittelsteg 131 und die Rippen 132 verbinden den Innenring 129 und Außenring 130. Die radial ausgerichteten Rippen 132 verlaufen voneinander getrennt in axialer Richtung der Innen- und Außenringe 129, 130.

Der Laufbelag 122 ist koaxial zum elastischen Dämpfungselement 123 angeordnet und ummantelt das elastische Dämpfungselement 123.

Der Laufbelag 122 und das elastische Dämpfungselement 123 weisen unterschiedliche Materialeigenschaften auf, insbesondere ist eine Federsteifigkeit (Federkonstante) vom Laufbelag 122 höher als eine Federsteifigkeit (Federkonstante) vom Dämpfungselement 123.

Der Laufbelag 122 ist aus einem verschleißfesten Kunststoff, beispielweise Polyurethan, mit einer Härte von mindestens 70 Shore A (DIN 53505). Bevorzugt wird ein Kunststoff mit einer Härte im Bereich von 60 bis 100 Shore A (DIN 53505) gewählt.

Das elastische Dämpfungselement 123 ist aus einem elastomeren Material mit einer Härte bis maximal 50 Shore A (DIN 53505). Bevorzugt wird ein Kunststoff mit einer Härte im Bereich von 30 bis 50 Shore A (DIN 53505) gewählt. Bei dem elastomeren Material kann es sich um Polyurethan oder eine Kautschuk- oder Silikongummimischung handeln.

Die Radnabe 121 kann aus Metall oder einem Kunststoff hergestellt werden. Der Kunststoff der Radnabe 121 kann beispielweise Polyamid sein. Bevorzugt wird ein faserverstärkter Kunststoff verwendet. Ist die Radnabe 121 aus Kunststoff, wie dargestellt, wird die Lagerbuchse 124 in die Durchgangsbohrung der Radnabe 121 eingepresst. Ist die Radnabe 121 aus Metall, beispielweise eine Aluminiumlegierung, kann die Lagerbuchse 124 entfallen, wobei dann das Laufrad 29' direkt auf die Antriebswelle aufgepresst wird.

Das Laufrad 29' (Radnabe 121, Laufbelag 122 und Dämpfungselement 123) kann einteilig im Spritzguss, insbesondere Mehrkomponenten-Spritzguss hergestellt werden. Das Kunststoffmaterial wird dabei auf die Lagerbuchse 124 aufgespritzt. Die Lagerbuchse 124 ist somit im Kunststoffmaterial eingebettet.

Möglich ist auch, dass nur der Laufbelag 122 und das Dämpfungselement 123 aus Kunststoff einteilig im Spritzguss, insbesondere Mehrkomponenten-Spritzguss hergestellt werden, und die Radnabe 121 aus Metall gebildet ist. Das Kunststoffmaterial wird dabei auf die Radnabe 121 am Außenring 126 aufgespritzt. Ist hingegen auch die Radnabe 121 aus Kunststoff, können die vorgefertigten Bauteile, nämlich der erste Bauteil bestehend aus Laufbelag 122 und Dämpfungselement 123 und der zweite Bauteil bestehend aus der Radnabe 121 durch Fügen miteinander verbunden werden. Das Fügen kann mit oder ohne Zusatzwerkstoff, insbesondere Kleber, erfolgen.

Andererseits kann die Radnabe 121, der Laufbelag 122 und das Dämpfungselement 123 jeweils aus Kunststoff im Spritzguss hergestellt werden, wobei die vorgefertigten Bauteile schließlich durch Fügen miteinander verbunden werden. Das Fügen kann mit oder ohne Zusatzwerkstoff, insbesondere Kleber, erfolgen.

Wie nicht weiter dargestellt, kann das elastische Dämpfungselement 123 auch durch einen einfachen zylindrischen Kunststoffmantel (elastomeres Material) zwischen der Radnabe 121 und dem Laufbelag 122 gebildet sein. Der Kunststoffmantel ist mit einer Härte bis maximal 50 Shore A (DIN 53505) ausgeführt.

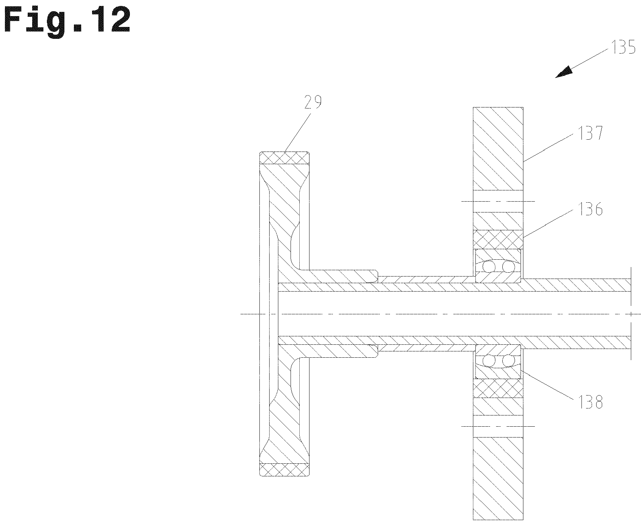

In den Fig. 11 und 12 ist eine mögliche Ausführung für den Grundrahmen 27 und den Fahrantrieb 133 des Transportfahrzeuges 7 gezeigt. Wie in Fig. 11 ersichtlich, ist an einer ersten Seite des Grundrahmens 27 der Fahrantrieb 133 und an einer zweiten Seite des Grundrahmens 27 die Führungseinheit 74, wie oben beschrieben, angeordnet. Bevorzugt sind zwei Führungseinheiten 74 vorgesehen, welche an einer der Seiten des Grundrahmens 27 angeordnet sind. Die Führungseinheiten 74 sind dabei im Nahbereich der Laufräder 29 angeordnet, welche auf der (zweiten) Seite des Grundrahmens 27 vorgesehen sind. An dieser Seite des Grundrahmens 27 befindet sich auch die oben beschriebene Schleifleitungsanordnung 37 (Fig. 6).

Je zwei Laufräder 29 sind auf einer Antriebswelle 134 befestigt. Die Antriebswellen 134 sind jeweils über Lagervorrichtungen 135 am Grundrahmen 27 gelagert. Die Lagervorrichtungen 135 weisen je Antriebswelle 134 jeweils zumindest ein elastisches nachgiebiges Ausgleichselement 136 (Fig. 12) auf, welches derart angeordnet und gestaltet ist, dass die Laufräder 29 in radialer Richtung relativ zum Grundrahmen 27 beweglich sind. Es sei hingewiesen, dass anstatt der Laufräder 29 auch die Laufräder 29' verwendet werden können.

In Fig. 12 ist eine mögliche Ausführung der Lagervorrichtungen 135 dargestellt. Die Lagervorrichtungen 135 sind nach gezeigter Ausführung am Grundrahmen 27 fest montiert und umfassen jeweils einen Lagerhalter 137, an welchem in einer Aufnahmebohrung das elastisch nachgiebige Ausgleichselement 136 vorgesehen ist. Das Ausgleichselement 136 ist als elastisch nachgiebiger Dämpfungsring ausgebildet, welcher koaxial zur Antriebswelle 134 angeordnet ist. Zusätzlich ist zur Lagerung der Antriebswelle 134 je Lagervorrichtung 135 ein Lager 138 vorgesehen. Das Ausgleichselement 136 ist zwischen dem Lagerhalter 137 und dem Lager 138 angeordnet. Das Ausgleichselement 136 ist aus einem elastomeren Material mit einer Härte bis maximal 50 Shore A (DIN 53505). Bevorzugt wird ein Kunststoff mit einer Härte im Bereich von 30 bis 50 Shore A (DIN 53505) gewählt. Bei dem elastomeren Material kann es sich um Polyurethan oder eine Kautschuk- oder Silikongummimischung handeln.

Beispielweise kann das Lager 138 mit einem einfachen zylindrischen Kunststoffmantel (welcher den Dämpfungsring bildet) umspritzt und dieser vorgefertigte Bauteil mit einem aus Metall hergestellten Lagerhalter 137 durch Fügen miteinander verbunden werden. Das Fügen kann mit oder ohne Zusatzwerkstoff, insbesondere Kleber, erfolgen.

Wie in Fig. 11 ersichtlich, umfasst der Fahrantrieb 133 beispielweise einen Antriebsmotor 30 und einen Zugmitteltrieb, welcher mit dem Antriebsmotor 30 gekoppelt ist. Die in einer Fahrtrichtung (Doppelpfeil) hintereinander angeordneten Laufräder 29 sind an einer ersten Seite des Grundrahmens 27 über ein Zugmittel 139 des Zugmitteltriebes antriebsverbunden, wobei zusätzlich jene Laufräder 29 an der zweiten Seite des Grundrahmens 27 über jeweils eine Antriebswelle 134 mit den Laufrädern 29 an der ersten Seite des Grundrahmens 27 antriebsverbunden sind. Das Zugmittel 139 ist mit dem Antriebsmotor 30 gekoppelt.

Grundsätzlich wäre aber auch ein Antriebskonzept möglich, bei dem nur eine der Antriebswellen 134 motorisch angetrieben ist.

Der Ordnung halber sei abschließend darauf hingewiesen, dass zum besseren Verständnis des Aufbaus des Transportfahrzeuges bzw. der Führungseinheit dieses bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Lagerregal | 25 | Förderantrieb |
| 2 | Stückgut-Manipulationseinheit | 26 | Förderantrieb |
| 3 | Regalgasse | 27 | Grundrahmen |
| 4 | Fördertechnik | 28 | Aufnahmeplattform |
| 5 | Fördertechnik | 29 | Laufrad |
| 6 | Stückgut | 30 | Antriebsmotor (Fahrantrieb) |
| 7 | Transportfahrzeug | 32 | Antriebsmotor (Transportvorrichtung) |
| 8 | Lagerkanal | 33 | Steuerelektronik |
| 9 | vorderer Regalsteher | 34 | Sensor |
| 10 | hinterer Regalsteher | 35 | Sensor |
| 11 | vordere Längstraverse | 36 | erste Führung |
| 12 | hintere Längstraverse | 37 | Schleifleitungsanordnung |
| 13 | Querträger | 38 | Teleskopiereinheit |
| 14 | Steuereinheit / Steuersystem | 39 | Grundrahmen |
| 15 | Transportvorrichtung | 40 | erster Schlitten |
| 16 | Fahrebene | 41 | zweiter Schlitten |
| 17 | Stückgut-Hebevorrichtung | 42 | Antriebsvorrichtung |
| 18 | Puffervorrichtung | 43 | erster Riemen |
| 19 | Hubantrieb | 44 | zweiter Riemen |
| 20 | Transportvorrichtung | 45 | Transportorgan |
| 21 | Antriebsmotor | 47 | zweite Führung |
| 22 | Förderantrieb | 48 | Führungsabschnitt |
| 23 | Bereitstellvorrichtung | 49 | Führungsrad |
| 24 | Bereitstellvorrichtung | 50 | Montagebohrung |
| 51 | Ausnehmung | 133 | Fahrantrieb |
| 57 | Befestigungselement | 134 | Antriebswelle |
| 74 | Führungseinheit | 135 | Lagervorrichtung |
| 75 | Lagervorrichtung | 136 | Ausgleichselement |
| 76 | Lagerkörper | 137 | Lagerhalter |
| 77 | Lagerarm | 138 | Lager |
| 78 | Lagerarm | 139 | Zugmittel |
| 79 | Ausgleichselement | | |
| 80 | Ausgleichselement | | |
| 81 | Radachse | | |
| 82 | Lagerhülse | | |
| 83 | Innenhülse | | |
| 84 | Elastomerring | | |
| 85 | Lagerbund | | |
| 121 | Radnabe | | |
| 122 | Laufbelag | | |
| 123 | Dämpfungselement | | |
| 124 | Lagerbuchse | | |
| 125 | Innenring Radnabe | | |
| 126 | Außenring Radnabe | | |
| 127 | Mittelsteg Radnabe | | |
| 128 | Rippen Radnabe | | |
| 129 | Innenring Dämpfungselement | | |
| 130 | Außenring Dämpfungselement | | |
| 131 | Mittelsteg Dämpfungselement | | |
| 132 | Rippen Dämpfungselement | | |

## Patentansprüche

1. Lagersystem mit
- Lagerregalen (1) mit jeweils in übereinander liegenden Regalebenen nebeneinander angeordneten Lagerkanälen (8) und zumindest einer Regalgasse (3) zwischen den Lagerregalen (1),
- Führungsschienen (11), welche an den Lagerregalen (1) befestigt und in übereinander liegenden Fahrebenen (16) jeweils paarweise angeordnet sind, wobei je Fahrebene (16) eine der Führungsschienen (11) der paarweise angeordneten Führungsschienen (11) eine erste Führung (36) und eine zweite Führung (47) ausbildet, wobei sich die erste Führung (36) parallel zur Längsrichtung des Lagerregales (1) und in einer parallel zur Fahrebene (16) verlaufenden ersten Führungsebene erstreckt, und wobei sich die zweite Führung (47) parallel zur Längsrichtung des Lagerregales (1) und in einer die Fahrebene (16) schneidenden zweiten Führungsebene erstreckt,
- mehreren Transportfahrzeugen (7) zum Einlagern von Stückgütern (6-1, 6-2) in das Lagerregal (1) und Auslagern von Stückgütern (6-1, 6-2) aus dem Lagerregal (1), welche entlang der Führungsschienen (11) verfahrbar sind, und wobei jedes Transportfahrzeug (7) umfasst:
einen Grundrahmen (27),
Laufräder (29; 29'), wovon erste Laufräder (29; 29') auf einer ersten Fahrzeugseite auf der ersten Führung (36) einer ersten Führungsschiene (11) abrollbar aufliegen und zweite Laufräder (29; 29') auf einer zweiten Fahrzeugseite auf der ersten Führung (36) einer zweiten Führungsschiene (11) abrollbar aufliegen, und wobei die Laufräder (29; 29') am Grundrahmen (27) drehbar gelagert sind,
einen Fahrantrieb (30), welcher mit zumindest einem Laufrad (29; 29') gekoppelt ist,
eine Transportvorrichtung (15) zum Einlagern von Stückgütern (6-1, 6-2) in die Lagerkanäle (8) und Auslagern von Stückgütern (6-1, 6-2) aus den Lagerkanälen (8),
zumindest eine Führungseinheit (74), welche über eine Lagervorrichtung (75) am Grundrahmen (27) im Wesentlichen starr montiert ist und welche auf der zweiten Führung (47) an voneinander abgewandten, parallel verlaufenden Führungsabschnitten (48) abrollbar anliegende Führungsräder (49) aufweist, um das Transportfahrzeug (7) auf der Fahrbewegung entlang des Lagerregales (1) quer zur zweiten Führungsebene geführt zu bewegen, wobei die Führungsräder (49) an der Lagervorrichtung (75) drehbar gelagert sind,
**dadurch gekennzeichnet, dass**
die Lagervorrichtung (75) einen Lagerkörper (76) mit einem ersten Lagerarm (77) und einem zweiten Lagerarm (78), ein elastisch nachgiebiges erstes Ausgleichselement (79) und ein elastisch nachgiebiges zweites Ausgleichselement (80) aufweist, wobei das erste Führungsrad (49) mit seiner Radachse (81) über das elastisch nachgiebige erste Ausgleichselement (79) am ersten Lagerarm (77) und das zweite Führungsrad (49) mit seiner Radachse (81) über das elastisch nachgiebige zweite Ausgleichselement (80) am zweiten Lagerarm (78) derart gelagert sind, dass die Führungsräder (49) relativ zum Lagerkörper (76) und in senkrechter Richtung zur zweiten Führungsebene beweglich sind,
wobei das erste Führungsrad (49) und das zweite Führungsrad (49) jeweils einen elastisch nachgiebigen Laufbelag aus Kunststoff aufweisen,
wobei der Kunststoff des Laufbelages des ersten Führungsrades (49) und zweiten Führungsrades (49) mit einer Härte im Bereich von 70 Shore A bis 100 Shore A ausgeführt ist und das erste Ausgleichselement (79) und zweite Ausgleichselement (80) jeweils mit einer Härte im Bereich von 30 Shore A bis 50 Shore A ausgefiihrt sind.

2. Lagersystem nach Anspruch 1, **dadurch gekennzeichnet, dass** das Ausgleichselement (79, 80) eine Lagerhülse (82), eine Innenhülse (83) und einen zwischen der Lagerhülse (82) und Innenhülse (83) angeordneten Elastomerring (84) umfasst, wobei die Lagerhülse (82) eine Bohrung ausbildet, in welcher die Radachse (81) des Führungsrades (49) gehalten ist.

3. Lagersystem nach Anspruch 1, **dadurch gekennzeichnet, dass** das Transportfahrzeug (7) entweder auf der ersten Fahrzeugseite oder zweiten Fahrzeugseite mit zwei Führungseinheiten (74) ausgestattet ist.

4. Lagersystem nach Anspruch 1, **dadurch gekennzeichnet, dass** je Fahrebene (16) an je einer der paarweise angeordneten Führungsschienen (11) und über die gesamte Länge der Führungsschiene (11) eine Schleifleitungsanordnung (37) befestigt ist, welche Schleifleitungsanordnung (37) zur Energie- und/oder Datenversorgung des Transportfahrzeuges (7) dient, und dass das Transportfahrzeug (7) entweder auf der ersten Fahrzeugseite oder zweiten Fahrzeugseite mit zwei Führungseinheiten (74) im Nahbereich des jeweiligen ersten Laufrades (29; 29') / zweiten Laufrades (29; 29') und zusätzlich mit Stromabnehmern zum Kontakt mit der Schleifleitungsanordnung (37) ausgestattet ist.

5. Lagersystem nach einem der Ansprüche 1 bis 4, **dadurch gekennzeichnet, dass** zumindest zwei der Laufräder (29; 29') auf einer Antriebswelle (134) befestigt sind und die Antriebswelle (134) über Lagervorrichtungen (135) am Grundrahmen (27) gelagert ist, wobei die Lagervorrichtungen (135) jeweils zumindest ein elastisch nachgiebiges Ausgleichselement (136) aufweisen, welches derart angeordnet und gestaltet ist, dass die Laufräder (29; 29') in radialer Richtung relativ zum Grundrahmen (27) beweglich sind.

6. Lagersystem nach einem der Ansprüche 1 bis 5, **dadurch gekennzeichnet, dass** je zwei Laufräder (29; 29') auf einer Antriebswelle (134) befestigt und die Antriebswellen (134) je über Lagervorrichtungen (135) am Grundrahmen (27) gelagert sind, wobei die Lagervorrichtungen (135) je Antriebswelle (134) jeweils zumindest ein elastisch nachgiebiges Ausgleichselement (136) aufweisen, welches derart angeordnet und gestaltet ist, dass die Laufräder (29; 29') in radialer Richtung relativ zum Grundrahmen (27) beweglich sind.

7. Lagersystemnach einem der Ansprüche 1 bis 6, **dadurch gekennzeichnet, dass** die Laufräder (29') jeweils eine Radnabe (121) und einen koaxial zur Radnabe (121) angeordneten Laufbelag (122) und zusätzlich zwischen der Radnabe (121) und dem Laufbelag (122) ein elastisches Dämpfungselement (123) aufweisen, wobei die Laufräder (29') mit dem Laufbelag (122) auf der ersten Führung (36) abrollbar aufliegen.

8. Lagersystem nach Anspruch 7, **dadurch gekennzeichnet, dass** das elastische Dämpfungselement (123) koaxial zur Radnabe (121) angeordnet ist, wobei das elastische Dämpfungselement (123) umfasst
- einen Innenring (129),
- einen Außenring (130),
- einen Mittelsteg (131), welcher den Innenring (129) und Außenring (130) verbindet, und
- Rippen (132), welche voneinander getrennt in axialer Richtung der Innen- und Außenringe (129, 130) verlaufen und welche den Innenring (129) und Außenring (130) verbinden.

9. Lagersystem nach Anspruch 7 oder 8, **dadurch gekennzeichnet, dass** die Radnabe (121) umfasst
- einen Innenring (125),
- einen Außenring (126),
- einen Mittelsteg (127), welcher den Innenring (125) und Außenring (126) verbindet, und
- Rippen (128), welche voneinander getrennt in axialer Richtung der Innen- und Außenringe (125, 126) verlaufen und welche den Innenring (125) und Außenring (126) verbinden.

## Claims

1. A storage system having
- storage racks (1) having storage channels (8) in each case disposed adjacently in rack levels lying one above the other and at least one rack aisle (3) between the storage racks (1),
- guide tracks (11) which are attached to the storage racks (1) and which are disposed respectively in pairs in driving planes (16) lying one above the other, wherein one of the guide tracks (11) of the pairs of guide tracks (11) in each driving plane (16) forms a first guide (36) and a second guide (47), wherein the first guide (36) extends parallel with the longitudinal direction of the storage rack (1) and in a first guide plane extending parallel with the driving plane (16), and wherein the second guide (47) extends parallel with the longitudinal direction of the storage rack (1) and in a second guide plane intersecting the driving plane (16),
- multiple transport vehicles (7) for storing unit loads (6-1, 6-2) in the storage rack (1) and retrieving unit loads (6-1, 6-2) from the storage rack (1) which are able to move along the guide tracks (11), and wherein each transport vehicle (7) comprises:
a base frame (27),
running wheels (29; 29'), of which first running wheels (29; 29') on a first vehicle side lie on the first guide (36) of a first guide track (11) in a rollable manner and second running wheels (29; 29`) on a second vehicle side lie on the first guide (36) of a second guide track (11) in a rollable manner, and wherein the running wheels (29; 29') are rotatably mounted on the base frame (27),
a traction drive (30), which is coupled with least one running wheel (29; 29'),
a transport device (15) for storing unit loads (6-1, 6-2) in the storage channels (8) and removing unit loads (6-1, 6-2) from the storage channels (8),
at least one guide unit (74), which is mounted substantially rigidly on the base frame (27) via a bearing device (75) and which has guide wheels (49), which rest in a rollable manner on the second guide (47) on guide sections (48) facing away from one another and running parallel, in order to move the transport vehicle (7) in a guided manner during the travel movement along the storage rack (1) transversely to the second guide plane, wherein the guide wheels (49) are rotatably mounted on the bearing device (75),
**characterized in that**
the bearing device (75) has a bearing body (76) with a first bearing arm (77) and a second bearing arm (78), an elastically flexible first compensating element (79) and an elastically flexible second compensating element (80), wherein the first guide wheel (49) is mounted with its wheel axle (81) on the first bearing arm (77) via the elastically flexible first compensating element (79) and the second guide wheel (49) is mounted with its wheel axle (81) on the second bearing arm (78) via the elastically flexible second compensating element (80) such that the guide wheels (49) are movable relative to the bearing body (76) and in a direction perpendicular to the second guide plane,
wherein the first guide wheel (49) and the second guide wheel (49) each comprise an elastically flexible roll covering made of a plastic material,
wherein the plastic material of the roll covering of the first guide wheel (49) and the second guide wheel (49) is configured with a hardness in the range of 70 Shore A to 100 Shore A and the first compensating element (79) and the second compensating element (80) are each configured with a hardness in the range of 30 Shore A to 50 Shore A.

2. The storage system according to claim 1, **characterized in that** the compensating element (79, 80) comprises a bearing sleeve (82), an inner sleeve (83) and an elastomer ring (84) arranged between the bearing sleeve (82) and inner sleeve (83), wherein the bearing sleeve (82) forms a bore in which the wheel axle (81) of the guide wheel (49) is held.

3. The storage system according to claim 1, **characterized in that** the transport vehicle (7) is equipped with two guide units (74) either on the first vehicle side or on the second vehicle side.

4. The storage system according to claim 1, **characterized in that** a conductor line arrangement (37) is attached to one of the guide rails (11) arranged in pairs for each travel plane (16) and over the entire length of the guide rail (11), which conductor line arrangement (37) serves for power and/or data supply to the transport vehicle (7), and that the transport vehicle (7) is equipped either on the first vehicle side or second vehicle side with two guide units (74) in the vicinity of the respective first running wheel (29; 29') / second running wheel (29; 29') and additionally with current collectors for contact with the conductor line arrangement (37).

5. The storage system according to one of claims 1 to 4, **characterized in that** at least two of the running wheels (29; 29') are attached to a drive shaft (134), and the drive shaft (134) is mounted on the base frame (27) via bearing devices (135), wherein the bearing devices (135) each have at least one elastically flexible compensating element (136), which is disposed and configured such that the running wheels (29; 29') are movable in radial direction relative to the base frame (27).

6. The storage system according to one of claims 1 to 5, **characterized in that** two running wheels (29; 29') are attached to a drive shaft (134) in each case, and the drive shafts (134) are each mounted on the base frame (27) via bearing devices (135), wherein the bearing devices (135) of each drive shaft (134) each have at least one elastically flexible compensating element (136), which is disposed and configured such that the running wheels (29; 29') are movable in radial direction relative to the base frame (27).

7. The storage system according to one of claims 1 to 6, **characterized in that** the running wheels (29') each have a wheel boss (121) and a roll covering (122) disposed coaxially with the wheel boss (121) and additionally an elastic damping element (123) between the wheel boss (121) and the roll covering (122), wherein the running wheels (29') lie on the first guide (36) by means of the roll covering (122) in a rollable manner.

8. The storage system according to claim 7, **characterized in that** the elastic damping element (123) is disposed coaxially with the wheel boss (121), wherein the elastic damping element (123) comprises
- an inner ring (129),
- an outer ring (130),
- a central web (131) connecting the inner ring (129) and outer ring (130), and
- ribs (132) which extend separately from one another in the axial direction of the inner and outer rings (129, 130) and which connect the inner ring (129) and outer ring (130).

9. The storage system according to claim 7 or 8, **characterized in that** the wheel boss (121) comprises
- an inner ring (125),
- an outer ring (126),
- a central web (127) connecting the inner ring (125) and outer ring (126), and
- ribs (128) which extend separately from one another in the axial direction of the inner and outer rings (125, 126) and which connect the inner ring (125) and outer ring (126).

## Revendications

1. Système de stockage avec
- des rayonnages de stockage (1) avec respectivement des plans de rayonnages superposés de canaux de stockage (8) juxtaposés et au moins une allée de rayonnages (3) entre les rayonnages de stockage (1),
- des rails de guidage (11) qui sont fixés aux rayonnages de stockage (1) et qui sont disposés respectivement par paires dans des plans mobiles (16) superposés, dans lequel chaque plan de déplacement (16) d'un des rails de guidage (11) des rails de guidage (11) disposés par paires forme un premier guidage (36) et un deuxième guidage (47), dans lequel le premier guidage (36) s'étend parallèlement à la direction longitudinale du rayonnage de stockage (1) et dans un premier plan de guidage s'étendant parallèlement au plan de déplacement (16) et dans lequel le deuxième guidage (47) s'étend parallèlement à la direction longitudinale du rayonnage de stockage (1) et dans un deuxième plan de guidage coupant le plan de déplacement (16),
- plusieurs véhicules de transport (7) pour le stockage de pièces (6-1, 6-2) dans le rayonnage de stockage (1) et le déstockage de pièces (6-1, 6-2) hors du rayonnage de stockage (1), qui sont mobiles le long des rails de guidage (11) et dans lequel chaque véhicule de transport (7) comprend :
un châssis de base (27),
des roues (29 ; 29'), dont des premières roues (29 ; 29') reposent de manière roulante sur un premier côté du véhicule sur le premier guidage (36) d'un premier rail de guidage (11) et des deuxièmes roues (29 ; 29') reposent de manière roulante sur un deuxième côté du véhicule sur le premier guidage (36) d'un deuxième rail de guidage (11) et dans lequel les roues (29 ; 29') sont logées de manière rotative au niveau du châssis de base (27),
un entraînement de déplacement (30) qui est couplé avec au moins une roue (29 ; 29'), un dispositif de transport (15) pour le stockage de pièces (6-1, 6-2) dans les canaux de stockage (8) et le déstockage de pièces (6-1, 6-2) hors des canaux de stockage (8),
au moins une unité de guidage (74) qui est montée de manière globalement rigide, par l'intermédiaire d'un dispositif de palier (75), sur le châssis de base (27) et qui comprend,
sur le deuxième guidage (47), des roues de guidage (49) s'appuyant de manière roulante contre des portions de guidage (48), parallèles et opposées entre elles, afin de déplacer le véhicule de transport (7) de manière guidage sur le mouvement de déplacement le long du rayonnage de stockage (1) transversalement par rapport au deuxième plan de guidage, dans lequel les roues de guidage (49) sont logées de manière rotative au niveau du dispositif de palier (75),
**caractérisé en ce que**
le dispositif de palier (75) comprend un corps de palier (76) avec un premier bras de palier (77) et un deuxième bras de palier (78), un premier élément de compensation élastiquement flexible (79) et un deuxième élément de compensation élastiquement flexible (80), dans lequel la première roue de guidage (49) est logée avec son essieu (81),
par l'intermédiaire du premier élément de compensation élastiquement flexible (79) au niveau du premier bras de palier (77) et la deuxième roue de guidage (49) est logée avec son essieu (81), par l'intermédiaire du deuxième élément de compensation élastiquement flexible (80), au niveau du deuxième bras de palier (78), de façon à ce que les roues de guidage (49) soient mobiles par rapport au corps de palier (76) et dans une direction perpendiculaire au deuxième plan de guidage,
dans lequel la première roue de guidage (49) et la deuxième roue de guidage (49) comprennent chacune une garniture de roulement élastiquement flexible en matière plastique,
dans lequel la matière plastique de la garniture de roulement de la première roue de guidage (49) et de la deuxième roue de guidage (49) est conçue avec une dureté de l'ordre de 70 Shore A à 100 Shore A et le premier élément de compensation (79) et le deuxième élément de compensation (80) sont conçus respectivement avec une dureté de l'ordre de 30 Shore A à 50 Shore A.

2. Système de stockage selon la revendication 1, **caractérisé en ce que** l'élément de compensation (79, 80) comprend un manchon de palier (82), un manchon interne (83) et une bague en élastomère (84), disposée entre le manchon de palier (82) et le manchon interne (83), dans lequel le manchon de palier (82) comprend un alésage dans lequel l'essieu (81) de la roue de guidage (49) est maintenu.

3. Système de stockage selon la revendication 1, **caractérisé en ce que** le véhicule de transport (7) est muni, soit sur le premier côté du véhicule soit sur le deuxième côté du véhicule, de deux unités de guidage (74).

4. Système de stockage selon la revendication 1, **caractérisé en ce que** à chaque plan de déplacement (16), un dispositif de ligne conductrice (37) est fixé à un des rails de guidage (11) disposés par paires et sur toute la longueur du rail de guidage (11),
ce dispositif de ligne conductrice (37) permettant l'alimentation en énergie et/ou en données du véhicule de transport (7) et le véhicule de transport (7) est muni, soit sur le premier côté du véhicule soit sur le deuxième côté du véhicule, de deux unités de guidage (74) à proximité de la première roue (29 ; 29') / deuxième roue (29 ; 29') respective et, en outre, de collecteurs électriques pour le contact avec le dispositif de ligne conductrice (37).

5. Système de stockage selon l'une des revendications 1 à 4, **caractérisé en ce qu'**au moins deux des roues (29 ; 29') sont fixées sur un arbre d'entraînement (134) et l'arbre d'entraînement (134) est logé sur le châssis de base (27) par l'intermédiaire de dispositifs de paliers (135), dans lequel les dispositifs de paliers (135) comprennent chacun un élément de compensation élastiquement flexible (136) qui est disposé et conçu de façon à ce que les roues (29 ; 29') soient mobiles dans la direction radiale par rapport au châssis de base (27).

6. Système de stockage selon l'une des revendications 1 à 5, **caractérisé en ce que** respectivement deux roues (29 ; 29') sont fixées sur un arbre d'entraînement (134) et les arbres d'entraînement (134) sont logés chacun au niveau du châssis de base (27) par l'intermédiaire de dispositifs de paliers (135), dans lequel les dispositifs de paliers (135) comprennent chacun, pour chaque arbre d'entraînement (134), un élément de compensation élastiquement flexible (136) qui est disposé et conçu de façon à ce que les roues (29 ; 29') soient mobiles dans la direction radiale par rapport au châssis de base (27).

7. Système de stockage selon l'une des revendications 1 à 6, **caractérisé en ce que** les roues (29') comprennent chacune un moyeu (121) et une garniture de roulement (122) disposée de manière coaxiale par rapport au moyeu (121) et, en outre, entre le moyeu (121) et la garniture de roulement (122), un élément d'amortissement élastique (123), dans lequel les roues (29') reposent de manière roulante avec la garniture de roulement (122) sur le premier guidage (36).

8. Système de stockage selon la revendication 7, **caractérisé en ce que** l'élément d'amortissement élastique (123) est disposé de manière coaxiale par rapport au moyeu (121), dans lequel l'élément d'amortissement élastique (123) comprend
- une bague interne (129),
- une bague externe (130),
- une entretoise centrale (131) qui relie la bague interne (129) et la bague externe (130) et
- des nervures (132) qui s'étendent de manière séparée les unes des autres dans la direction axiale des bagues interne et externe (129, 130) et qui relient la bague interne (129) et la bague externe (130).

9. Système de stockage selon la revendication 7 ou 8, **caractérisé en ce que** le moyeu (121) comprend
- une bague interne (125),
- une bague externe (126),
- une entretoise centrale (127) qui relie la bague interne (125) et la bague externe (126) et
- des nervures (128) qui s'étendent de manière séparée les unes des autres dans la direction axiale des bagues interne et externe (125, 126) et qui relient la bague interne (125) et la bague externe (126).
